# EUROPÄISCHE PATENTSCHRIFT

(11) **EP 0 766 714 B1**
(45) Veröffentlichungstag und Bekanntmachung des Hinweises auf die Patenterteilung: **03.03.1999**
(21) Anmeldenummer: 95923305.7
(22) Anmeldetag: 12.06.1995
(51) Int. Cl.: C08L 27/06, C09D 127/06, B60R 13/08, C08J 9/10

(54) **AKUSTISCH WIRKSAME PLASTISOLE**
ACOUSTIC PLASTISOLS
PLASTISOLS ACOUSTIQUES

(30) Priorität: 20.06.1994 DE 4421012
(43) Veröffentlichungstag der Anmeldung: 09.04.1997
(73) Patentinhaber: Henkel Teroson GmbH, 69123 Heidelberg (DE)
(72) Erfinder: WESCH, Karl, D-69429 Waldbrunn (DE); RUCH, Klaus, D-69168 Wiesloch (DE)
(74) Vertreter: Mathes, Nikolaus, Dr.
(86) Internationale Anmeldenummer: EP9502259
(87) Internationale Veröffentlichungsnummer: WO9535345

(56) Entgegenhaltungen:
- EP-A- 0 343 101
- EP-A- 0 346 173
- DE-A- 4 301 007
- DE-B- 2 840 996
- US-A- 5 043 379
- PATENT ABSTRACTS OF JAPAN vol. 14, no. 68 (C-0686) & JP,A,01 289 854 (KIYOUESHIYA YUSHI KAGAKU KOGYO KK)
- PATENT ABSTRACTS OF JAPAN vol. 11, no. 369 (C-461) & JP,A,62 141 047 (AISIN CHEM CO LTD)
- DATABASE WPI Week 9316, Derwent Publications Ltd., London, GB; AN 93-129226 & JP,A,5 065 450 (CEMIDINE CO LTD; HONDA MOTOR CO LTD) 19. März 1993

## Beschreibung

Die Erfindung betrifft die Verwendung von spritzbaren Plastisolzusammensetzungen zur Schalldämpfung.

Bei der Herstellung von Fahrzeugen, Maschinen und Geräten werden heutzutage fast ausschließlich sehr dünnwandige Bleche eingesetzt. Durch sich mechanisch bewegende Teile oder laufende Motoren werden diese dünnwandigen Bleche unvermeidbar in Schwingungen versetzt und strahlen demzufolge Schall ab. Eine weitere Ursache für störende Geräusche insbesondere bei fahrenden Kraftfahrzeugen sind aufprallende Teilchen (Steine und Splitt, Sand, Wasser), welche von den Rädern gegen die Radkästen und den Fahrzeugboden geschleudert werden. Dieses Geräusch wirkt besonders störend und unangenehm, da es in erheblichem Umfang höher frequente Schallanteile enthält.

Zur Reduzierung beider Beschallarten hat es zahlreiche Lösungsvorschläge gegeben. Zur Reduzierung der Schallabstrahlung und Körperschalldämpfung werden diese Bleche daher insbesondere im Automobilbau und bei der Herstellung von Haushaltsgeräten mit schalldämpfenden Belägen, sogenannten Antidröhnbeschichtungen, versehen.

Nach herkömmlicher Verfahrensweise werden Mischungen aus Füllstoffen mit hohem spezifischen Gewicht und Bitumen zu Folien extrudiert, aus denen dann die entsprechenden Formteile gestanzt oder geschnitten werden. Anschließend werden diese Folien auf die betreffenden Blechteile geklebt, wobei sie gegebenenfalls noch unter Erwärmen an die Form des Bleches angepaßt werden müssen. Obwohl diese Bitumenfolien aufgrund ihres geringen Materialpreises noch häufig Anwendung finden, sind sie sehr spröde und neigen insbesondere bei tiefen Temperaturen zum Abplatzen vom Blech. Auch die vielfach vorgeschlagenen Zusätze von Elastomeren ergeben nur eine geringfügige Verbesserung, die für viele Anwendungen unzureichend ist. Des weiteren ist das Aufbringen der vorgeformten Bitumenteile auf kompliziert geformte oder schwer zugängliche Blechteile von Maschinen oder Fahrzeugen, z.B. die Innenflächen der Hohlräume von Kraftfahrzeugtüren, überhaupt nicht möglich. Als weiterer Nachteil kommt hinzu, daß für ein einziges Fahrzeug oder Gerät in vielen Fällen mehrere Stanzteile benötigt werden, wodurch eine aufwendige Lagerhaltung erforderlich ist.

Es hat daher nicht an Versuchen gefehlt, mit anderen Polymersystemen die Nachteile der Bitumenfolien zu eliminieren. So wurden z.B. Füllstoffe enthaltende wäßrige Polymerdispersionen von Polyvinylacetat oder Ethylen-Vinylacetat-Copolymeren entwickelt, die auf die Blechteile in der notwendigen Belagdicke aufgespritzt werden können. Diese Systeme sind jedoch für die industrielle Verwendung mit hohen Fertigungsstückzahlen nachteilig, da insbesondere bei größeren Belagdicken das Wasser nicht schnell genug aus der aufgespritzten Schicht entfernt werden kann.

Die schalldämpfenden Eigenschaften von Polymerbeschichtungen sind im Bereich der Glasübergangstemperatur des Polymersystems am ausgeprägtesten, da in diesem Temperaturbereich aufgrund der Viskoelastizität des Polymeren die mechanische Energie der Schwingungsvorgänge über molekulare Fließvorgänge in Wärme umgewandelt wird. Herkömmliche spritzbare Beschichtungsmaterialien auf der Basis von PVC-Plastisolen, die z.B. als Unterbodenschutz im Automobilbau in großem Umfang Anwendung finden, weisen im Gebrauchstemperaturbereich von -20°C bis +60°C keine nennenswerte schalldämpfende Wirkung auf, da das Maximum des Glasübergangs je nach Weichmacheranteil bei etwa -20°C bis +50°C liegt.

Daher wurden Versuche unternommen, diese herkömmlichen PVC-Plastisole so zu modifizieren, daß sie im Gebrauchstemperaturbereich von -20°C bis +60°C bessere schalldämpfende Eigenschaften aufweisen. Aus der DE-A-3514753 sind Beschichtungen bekannt, die in üblichen PVC-Plastisolen mehrfach ungesättigte Verbindungen, z.B. Di- oder Triacrylate, peroxidische Vernetzer und anorganische Füllstoffe enthalten. Im ausgehärteten Zustand sind derartige Plastisole jedoch glashart und spröde, so daß diese für die Anwendung im Automobilbau wenig geeignet sind, da sie insbesondere bei tiefen Temperaturen keine ausreichende Flexibilität haben. Außerdem weisen diese Formulierungen einen sehr niedrigen Verlustfaktor (tan 6) auf, so daß die schalldämpfende Wirkung nicht sehr ausgeprägt ist.

In der DE-A-3444863 werden Zusammensetzungen beschrieben, die PVC bzw. Vinylchlorid/Vinylacetat-Copolymere, gegebenenfalls Methylmethacrylat-homopolymere oder -copolymere, eine Weichmachermischung und inerte Füllstoffe enthalten. Die Weichmachermischung besteht aus mit dem Methylmethacrylat-Polymeren verträglichen Weichmachern und Weichmachern für die Vinylchlorid-Polymeren, die mit dem gegebenenfalls vorhandenen Methacrylat-Polymeren unverträglich sind. Die so erhaltenen Plastisole weisen gegenüber herkömmlichen PVC-Plastisolen verbesserte schalldämpfende Eigenschaften auf. Insbesondere bei Temperaturen oberhalb von etwa 30°C sinkt die schalldämpfende Wirkung jedoch wieder. Versucht man, durch Variation der Mengenverhältnisse der Einzelkomponenten den Bereich des maximalen Verlustfaktors (tan δ) zu höheren Temperaturen zu verschieben, so nimmt die Kälteflexibilität der Beschichtung sehr stark ab. Eine reduzierte Kälteflexibilität ist aber gerade für eine Anwendung im Fahrzeugbau nachteilig. Außerdem nimmt bei diesen Formulierungen der Verlustfaktor bei niederen Temperaturen sehr stark ab. Derartige Plastisolzusammensetzungen haben also immer nur in einem sehr schmalen Temperaturbereich einen ausreichend hohen Verlustfaktor. Wie bereits oben erwähnt, ist bei den Zusammensetzungen gemäß DE-A-3444863 eine Weichmachermischung erforderlich, wobei der eine Weichmacher mit dem Methacrylat verträglich sein muß und mit dem PVC unverträglich und der andere Weichmacher mit dem PVC verträglich. Dies schränkt die Wahl der geeigneten Weichmacher extrem stark ein, wobei insbesondere die für das Methacrylat-Polymeren verträglichen Weichmacher sehr teuer sind, so daß es auch aus diesem Grunde wünschenswert ist, einfachere und wirtschaftlichere Alternativen zu finden.

Die DE-C-3830345 schlägt eine spritzbare Plastisolzusammensetzung vor bestehend aus einer Mischung von einer ersten Polymerkomponente, welche nach dem Gelieren des Plastisols die kontinuierliche Phase bildet und einer zweiten schwach vernetzten Polymerkomponente, welche nach dem Gelieren des Plastisols nur angequollen ist und in der kontinuierlichen Phase dispergiert vorliegt, wobei die kontinuierliche Phase im wesentlichen für die mechanischen Eigenschaften, wie Abriebfestigkeit, Kälteflexibilität, Härte und Haftung auf dem Untergrund verantwortlich ist, während die feinverteilte angequollene Polymerphase im wesentlichen für die schalldämpfenden Eigenschaften der ausgelierten Beschichtung verantwortlich ist.

Zur Reduzierung der Geräusche, die durch aufprallende Teilchen entstehen, schlägt die DE-C-4013318 zweischichtige Beschichtungen vor, die aus einer inneren, weichen Schicht bestehen und einer Deckschicht, die im wesentlichen den Abrieb der gesamten Beschichtung verhindert. Die DE-C-4013318 vermag zwar sowohl den Körperschall zu dämpfen als auch die durch aufprallende Teilchen hervorgerufenen Geräusche zu reduzieren, jedoch müssen zu diesem Zweck zwei Beschichtungen nacheinander auf die Substrate aufgebracht werden. Dieses bedeutet Lagerhaltung von zwei Materialien sowie doppelte Applikationsgeräte. Zur Vereinfachung der Anwendung im Kraftfahrzeugbau ist es wünschenswert, Beschichtungen bereitzustellen, die einschichtig applizierbar sind und vorzugsweise mit vorhandenem Applikationsgerät angewendet werden können.

Für eine möglichst kostengünstige Beschichtung ist es daher wünschenswert, möglichst auf handelsübliche, in großen Mengen produzierte Polymere und Weichmacher zurückgreifen zu können.

Der Erfindung liegt daher die Aufgabe zugrunde, eine Beschichtung für steife Substrate, insbesondere für Bleche im Unterbodenbereich von Kraftfahrzeugen einschließlich der Radkästen zu entwickeln, welche körperschalldämpfend wirkt sowie korrosionsschützend und abriebfest ist, eine wesentliche Verringerung der durch aufprallende Teilchen hervorgerufenen Geräusche bewirkt und welche darüber hinaus als einschichtige Beschichtung mit vorhandenen Plastisolapplikationsgeräten anwendbar und vorzugsweise aus handelsüblichen Polymeren und Weichmachern besteht.

Es wurde jetzt überraschend gefunden, daß Beschichtungen aus Plastisolzusammensetzungen auf der Basis von Vinylchlorid-Vinylacetat-Copolymeren, die 5 bis 20 Gew.% Vinylacetat als Comonomer enthalten, sowohl korrosionsschützend und abriebfest sind als auch gleichzeitig körperschalldämpfend sind und eine wesentliche Verringerung der durch aufprallende Teilchen hervorgerufenen Geräusche bewirken. Plastisole auf Basis von Vinylchlorid-Vinylacetat-Copolymeren und deren Verwendung als abriebfeste Beschichtungen sind an sich bekannt. Üblicherweise werden jedoch diese Copolymeren mit geringem Vinylacetat-Anteil von ca. 2 bis 14 Gew.% bezogen auf das Copolymer einem Plastisol zugesetzt, das als Hauptbestandteil ein PVC-Homopolymer enthält. Dieser übliche Zusatz soll eine Erniedrigung der Geliertemperatur bewirken. Die PVC-Pulver, die in den Plastisolen des Standes der Technik eingesetzt werden, sind sehr feinteilige Polymerpulver, die nach dem Emulsionspolymerisations- bzw. Mikrosuspensionspolymerisationsverfahren als sogenannte Pastentypen hergestellt werden. Bisher wurden überwiegend untergeordnete Mengen an Suspensionspolymeren als sog. Extenderpolymere der Plastisolzusammensetzung zugesetzt. Es wurden bisher zwar schon Suspensionspolymere mit hohem Vinylacetat-Anteil im Copolymer als Hauptkomponente im Plastisol eingesetzt, aber diese Zusammensetzungen hatten einen hohen Weichmachergehalt (siehe DE-A-2 840 996). Neu ist jedoch, daß in derartigen Plastisol-Beschichtungen Copolymere mit hohem Vinylacetat-Anteil als Hauptkomponente bei geringem Weichmachergehalt eingesetzt werden, und daß derartige Beschichtungen zusätzlich zu dem Schutz vor Abrieb zur Geräuschdämpfung geeignet sind. Die Eignung zur Geräuschdämpfung ist um so überraschender, da nach gängiger Lehrmeinung das Optimum der Geräuschdämpfung an der Glasübergangstemperatur der Zusammensetzung ist. Die Glasübergangstemperatur von Plastisolen wird durch das eingesetzte Polymer und die Art und Menge des eingesetzten Weichmachers bestimmt. Bei den üblichen spritzbaren PVC-Plastisolen wie sie in der Automobilindustrie als Unterbodenschutz eingesetzt werden, liegt wegen des hohen Weichmachergehaltes die Glasübergangstemperatur und damit auch das Maximum der akustischen Dämpfung bei Temperaturen von 0°C bis -10°C oder sogar darunter. Die Glasübergangstemperatur von PVC-Homopolyeren beträgt 81°C, die von Polyvinylacetat-Homopolymer 32°C. Die Glasübergangstemperatur von Copolymeren läßt sich nach der Formel von Fox (T.G.Fox, Bull.Am.Phys.Soc., 1, 122 [1956]) vorausberechnen, so daß die Glasübergangstemperatur von Vinylchlorid-Vinylacetat-Copolymeren deutlich unterhalb der Glasübergangstemperatur de PVC-Homopolymers liegt, insbesondere bei einem hohen Anteil an Vinylacetat im Copolymeren. Demzufolge ist auch die Glasübergangstemperatur eines Plastisols aus Vinylchlorid-Vinylacetat-Copolyeren tiefer als diejenige eines Plastisols aus PVC-Homopolymeren. Es war daher nicht zu erwarten, daß spritzbare Plastisole auf der Basis von Vinylchlorid-Vinylacetat-Copolymeren eine brauchbare akustische Dämpfung ergeben würden.

Diese zusätzliche überraschende Eigenschaft der erfindungsgemäßen spritzbaren Plastisole ermöglicht es, den Forderungen der Automobilindustrie gerecht zu werden, in einem Produkt die Funktion des Unterbodenschutzes (Schutz vor Abrieb) und der Reduzierung von Geräuschen gerecht zu werden. Besonders überraschend und ökonomisch vorteilhaft ist dabei, daß handelsübliche Vinylchlorid-Vinylacetat-Copolymere für die erfindungsgemäßen Plastisole verwendet werden können. Hierbei werden aus Gründen der Verfügbarkeit die Suspensionspolymeren besonders bevorzugt. Die Verwendung von Suspensionspolymeren bewirkt außerdem eine erwünschte niedrige Viskosität des Plastisols bei trotzdem guter Gelierfähigkeit.

Erfindungsgemäß werden daher spritzbare Plastisolzusammensetzungen vorgeschlagen, die mit herkömmlichen Plastisolauftragsgeräten versprüht werden können und auf konventionelle Weise geliert werden können. Diese Plastisolzusammensetzungen dieser Erfindung sind gekennzeichnet durch einen Gehalt an
a) 5 bis 60 Gew.% mindestens eines Vinylchlorid-Vinylacetat-Copolymeren, mit einem Vinylacetatanteil von 5 bis 20 Gew.-% und einem K-Wert nach DIN 53726 von 40 bis 80, wobei das Copolymer ein Suspensionspolymer ist.
b) 5 bis 65 Gew.% Weichmacher, ausgewählt aus der Gruppe gebildet durch Alkyphthalate wie Dibutylphthalat, Dioctylphthalat, Benzylbutylphthalat, Dibenzylphthalat, Diisononylphthalat (DINP), Diisodecylphthalat (DIDP) sowie Diundecylphthalat (DIUP), organische Phosphate. Adipate und Sebazate, Benzylbenzoat, Alkylsulfonsäureester des Phenols bzw. Kresols, wobei das Weichmacher/Copolymer-Verhältnis 1:1 bis 1:4, vorzugsweise 1:1.5 bis 1:2,5 beträgt,
c) 0 bis 40 Gew.% Füllstoffen,
d) 0.01 bis 5 Gew.% eines Haftvermittlers,
e) gegebenenfalls weiteren reaktiven Zusätzen, sowie Hilfs- und Zusatzstoffen, wobei die Summe der Einzelkomponenten 100 Gew.% beträgt,

Besonders geeignete Vinylchlorid-VinylacetatCopolymere enthalten dabei einen Vinylacetatanteil von 7 bis 19 Gew.% Vinylacetat bezogen auf das Copolymere. Das Molekulargewicht bzw. die Molekulargewichtsverteilung von PVC bzw. dessen Copolymeren wird üblicherweise durch den K-Wert nach DIN 53726 gemessen. Der K-Wert der erfindungsgemäß einzusetzenden Copolymeren beträgt 40 bis 80, vorzugsweise 50 bis 65. DAs Weichmacher Copolymer Verhältnis beträgt dabei 1:1 bis 1:4, vorzugsweise 1:1.5 bis 1:2.5.

Die zu verwendenden Weichmacher sind auszuwählen aus Alkylphthalaten wie Dibutylphthalat, Dioctylphthalat, Benzylbutylphthalat, Dibenzylphthalat, Diisononylphthalat (DINP), Diisodecylphthalat (DIDP) sowie Diundecylphthalat (DIUP). Geeignet sind jedoch auch die bekannten Weichmacher aus der Gruppe der organischen Phosphate, Adipate und Sebazate oder auch Benzylbenzoat und Alkylsulfonsäureester des Phenols bzw. Kresols. Die Auswahlkriterien für die bevorzugt verwendeten Weichmacher richten sich zum einen nach der Polymerzusammensetzung sowie zum anderen nach Viskosität, Gelierbedingungen des Plastisols sowie den gewünschten akustischen Eigenschaften.

Als Füllstoffe für die erfindungsgemäßen Plastisole eignen sich alle an sich bekannten Füllstoffe, wie z.B. Calciumcarbonat in Form der diversen Kreiden, Schwerspat, Glimmer, Vermiculit, insbesondere bevorzugt wird Schwerspat oder Calciumcarbonat.

Die erfindungsgemäßen Plastisole können reaktive Zusätze enthalten, wie zum Beispiel Di- oder Polyisocyanate, wobei diese vorzugsweise blockiert oder mikroverkapselt sind, sowie Di- oder Polyamine oder Polyaminoamide und/oder hydroxyfunktionelle Verbindungen, wie z.B. Polyesterpolyole oder Polyetherpolyole. Weitere Beispiele für reaktive Zusätze sind Kombinationen von Di- oder Polyepoxyverbindungen in Kombination mit Di- oder Polyaminen oder Polyaminoamiden. Auch der Zusatz von Mono-, Di- und/oder Trimethacrylaten bzw. -acrylaten in Kombination mit Peroxiden ist möglich, obwohl dies nicht zu den bevorzugten Ausführungsformen der erfindungsgemäßen Plastisolzusammensetzungen gehört, da der Zusatz der ungesättigten Verbindungen in Kombination mit Peroxiden häufig zu Lagerstabilitätsproblemen führt, außerdem ist die Kälteflexibilität derartiger Zusammensetzungen wegen des hohen Vernetzungsgrades vielfach unbefriedigend.

Bei vielen Anwendungen ist der Zusatz von Haftvermittlern erforderlich. Als Haftvermittler können dabei die verschiedenen Polyaminoamide, Epoxidharze in Kombination mit heißhärtenden Vernetzern (z.B. Dicyandiamid), Phenolharze, Terpenphenolharze sowie (blockierte) Di-bzw. Polyisocyanate verwendet werden. Bevorzugt werden die Polyaminoamide auf der Basis von Polyaminen und dimerisierten bzw. polymerisierten Fettsäuren eingesetzt. Die Haftvermittler werden üblicherweise in Mengen zwischen 0,01 und 5 Gew.%, bezogen auf die gesamte Plastisolformulierung, verwendet.

Außerdem können die erfindungsgemäßen Plastisole gegebenenfalls weitere Hilfs- und Zusatzstoffe, wie sie in der Plastisol-Technologie üblich sind, enthalten. Hierzu zählen z.B. Farbpigmente, Alterungsschutzmittel, Rheologie-Hilfsmittel sowie Treibmittel zur Herstellung von geschäumten Plastisolen. Als Treibmittel geeignet sind alle an sich bekannten Treibmittel, vorzugsweise organische Treibmittel aus der Klasse der Azoverbindungen, N-Nitrosoverbindungen, Sulfonylhydrazide oder Sulfonylsemicarbazide. Aus der Klasse der Azoverbindungen seien das Azobisisobutyronitril und insbesondere das Azodicarbonamid genannt, aus der Klasse der Nitrosoverbindungen sei beispielhaft das Di-Nitrosopentamethylentetramin genannt, aus der Klasse der Sulfohydrazide das 4,4'-Oxybis(benzolsulfonsäurehydrazid) und aus der Klasse der Semicarbazide das p-Toluolsulfonylsemicarbazid genannt.

Eine weitere Möglichkeit, die erfindungsgemäßen Plastisole aufzuschäumen, besteht darin, sogenannte Mikrohohlkugeln den Plastisolen zuzusetzen. Derartige Mikrohohlkugeln bestehen häufig aus Polyvinylidenchlorid und können entweder in der vorgeschäumten Form als Mikrohohlkugeln direkt dem Plastisol zugesetzt werden oder in einer besonders bevorzugten Art werden die "Mikrohohlkugeln" als feinteiliges Pulver in der ungeschäumten Form dem Plastisol zugesetzt. Diese ungeschäumten "Mikrohohlkugeln" expandieren erst bei der Gelierung des Plastisols und ergeben so eine sehr gleichmäßige und feinporige Schäumung. Derartige "Mikrohohlkugeln" sind z.B. unter dem Handelsnamen Expancel der Fa. Nobel Industries im Handel erhältlich.

Die geschäumten Plastisole sind insbesondere geeignet zur Reduktion der Geräusche, die bei fahrenden Kraftfahrzeugen durch aufprallende Teilchen (Steine und Splitt, Sand, Wasser) hervorgerufen werden. Da hiervon hauptsächlich die Radkästen und Teile des Fahrzeugbodens betroffen sind, werden die geschäumten Plastisole auch bevorzugt in diesen Bereichen eingesetzt.

Ein weiteres Einsatzgebiet für die geschäumten Plastisole ist die Verwendung als sogenannte "pillar-fillers" in Hohlräumen wie den Dachholmen oder den A-, B-, und/oder C-Säulen eines Kraftfahrzeuges. Hierbei wird in der Art eines Pfropfens durch das geschäumte Plastisol der gesamte Querschnitt des Hohlraums versperrt, um zu verhindern, daß die in den Holmen eingeschlossenen Luftsäulen zu schwingen beginnen können.

Auch wenn mit der Plastisol-Beschichtung überwiegend körperschalldämpfende Eigenschaften erzielt werden sollen, kann dieser Effekt häufig durch Aufschäumung verstärkt werden.

Die erfindungsgemäßen Plastisole zeichnen sich überraschenderweise durch einen hohen Verlustfaktor aus, wie er für eine wirksame Körperschalldämpfung notwendig ist. Dieser Verlustfaktor wurde nach üblichen Methoden entweder mit Hilfe der dynamisch mechanischen Thermoanalyse (DMTA) ermittelt oder durch den Biegeschwingungsversuch nach Oberst.

Zur Bestimmung der Reduktion des durch Steinschlag, Spritzwasser und ähnliche Teilchen hervorgerufenen Schalles wurden mit den erfindungsgemäßen Plastisolen beschichtete Bleche nach der APAMAT (R)-Methode vermessen. Bei dieser Methode werden Kugeln gegen die beschichtete Seite des Bleches geschleudert und das Schalldruck-Spektrum des beschichteten Bleches mit dem Schalldruck-Spektrum eines unbehandelten Bleches verglichen. Die Differenz dieser beiden Schalldrucke wird in Abhängigkeit von der Frequenz aufgetragen.

Zur näheren Erläuterung der Erfindung sollen die nachfolgenden Beispiele dienen, sie haben nur exemplarischen Charakter und decken nicht die gesamte Breite der erfindungsgemäßen Plastisole ab. Aus den oben gemachten Angaben kann der Fachmann diese jedoch leicht herleiten. Die in den nachfolgenden Beispielen genannten Teile sind Gewichtsteile, falls nicht anders angegeben.

Unter Rühren und Homogenisieren mit einem Dissolver wurden aus folgenden Bestandteilen Plastisole hergestellt:

| | |
|---|---|
| PVC-Homo- bzw. Copolymer | 45 Teile |
| Diisononylphthalat | 26 Teile |
| Calciumoxid | 1 Teil |
| Kreide (gemahlen) | 15.5 Teile |
| Kreide (gefällt) | 8.0 Teile |
| Zinkoxid | 0.5 Teile |
| Polyaminoamid (Euretek 507, Fa. Witco) | 1.0 Teile |
| Benzin (Isopar H, Fa. Exxon) | 3.0 Teile. |

Die so hergestellten Plastisole sind aufgrund ihrer Viskosität (ca. 1 bis 3 Pa.s, gemessen bei 23°C mit Rheomat 30, System 14 der Fa. Contraves) spritzbare Massen und zeichnen sich durch gute Lagerstabilität aus.

Die akustischen Dämpfungswerte (dcombi) der nachfolgenden Tabellen 1 und 2 wurden nach DIN 53440 - der Oberst-Methode - bestimmt (bei 200Hz). Es wurde bei verschiedenen Schichtstärken gemessen, und dann auf ein Belaggewicht von 50% normiert, d.h., das Gewicht der Beschichtung mit dem akustisch dämpfenden Plastisol betrug 50% des Blechgewichtes. In einer weiteren Normierung wurde auf ein Schichtdickenverhältnis von 4:1 normiert, d.h., bei einem lmm dicken Blechstreifen betrug die Dicke der Beschichtung 4mm. Die Abmessungen der für die Oberst-Methode verwendeten Federstahlbleche waren 240 x 10mm, lmm Dicke. Der Blechstreifen war auf einer Länge von 200mm mit dem erfindungsgemäßen Plastisol beschichtet. Dabei wurden die Plastisole mit Hilfe eines dünn aufgetragenen Haftprimers auf dem Meßstreifen (Federstahl) aufgebracht und 25 min. bei 160°C geliert.

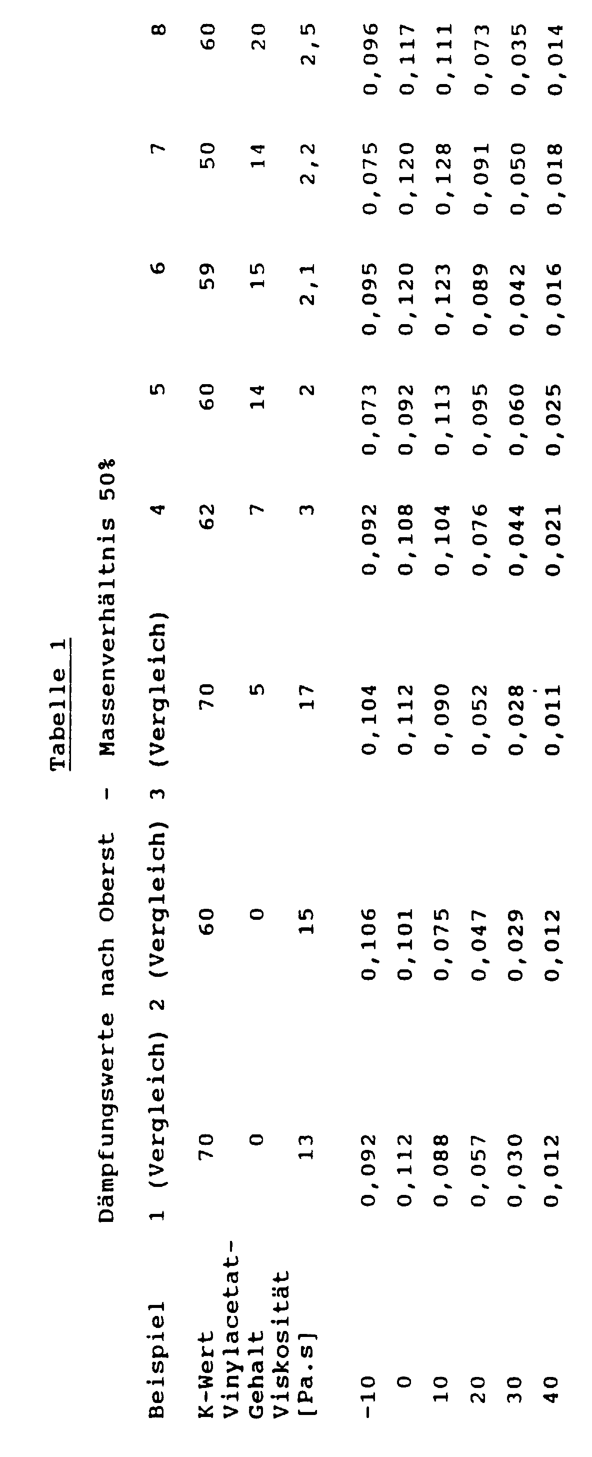

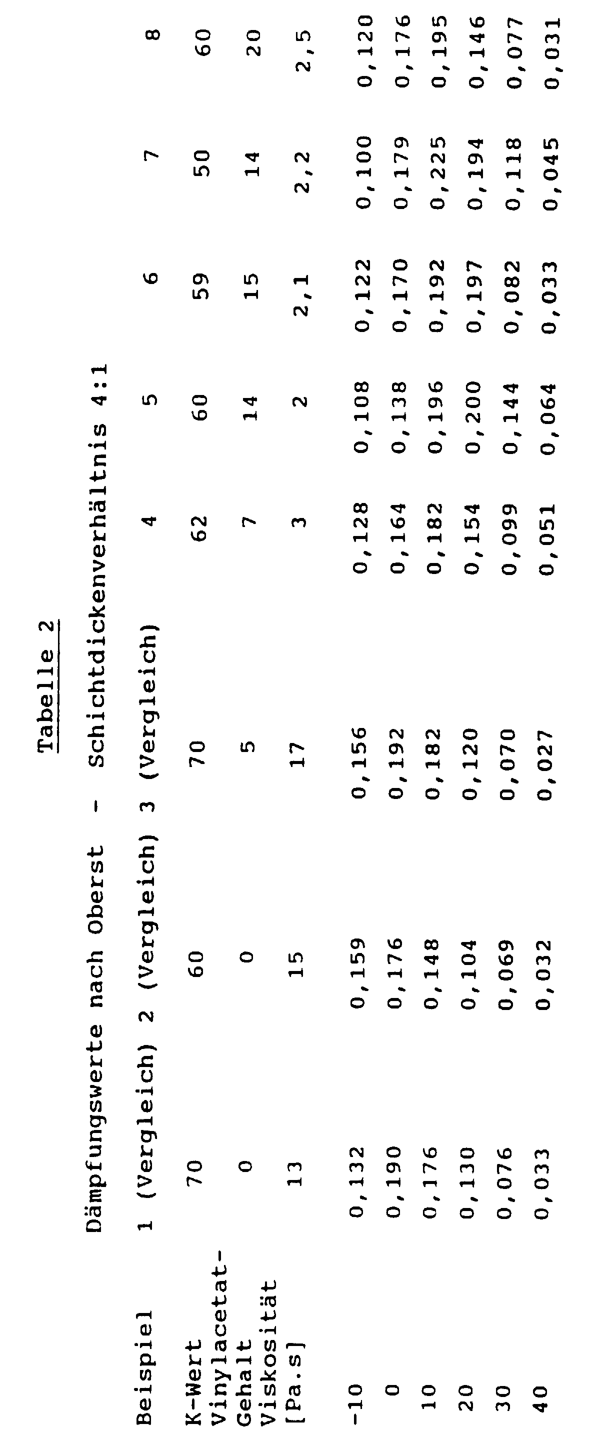

Für die Zusammensetzungen der Beispiele 1 bis 3 wurden Pastentypen als PVC-Homo- bzw. Copolymer eingesetzt. Für die Zusammensetzungen der erfindungsgemäßen Beispiele 4 bis 8 wurden Suspensionspolymere als Copolymere verwendet. Für das Beispiel 6 wurde anstelle des Diisononylphthalates als Weichmacher das Isodecylphthalat eingesetzt.

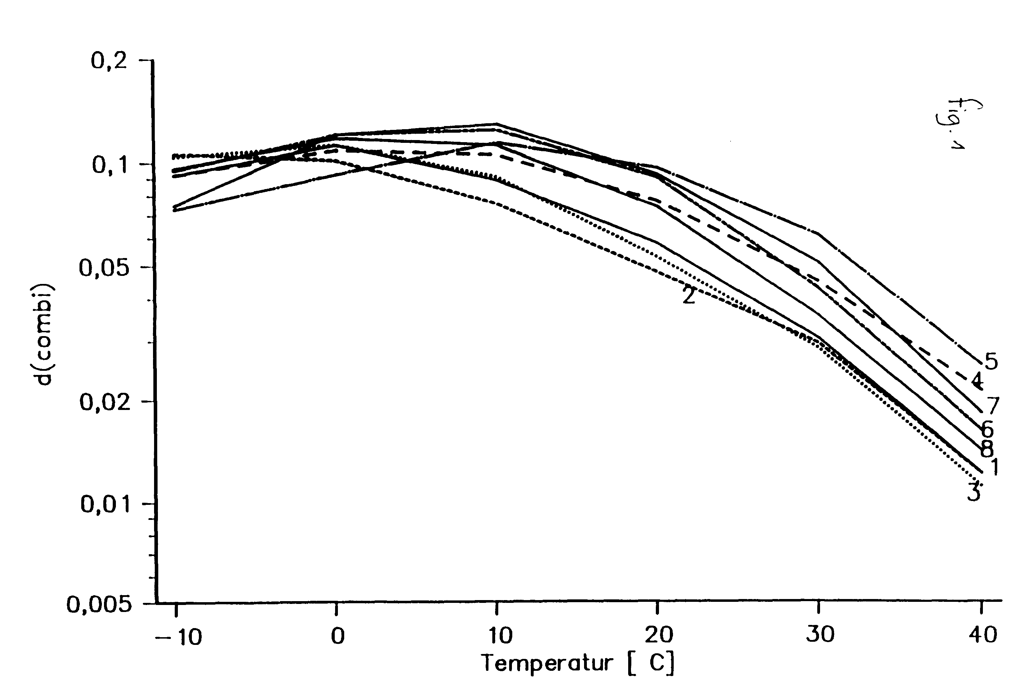

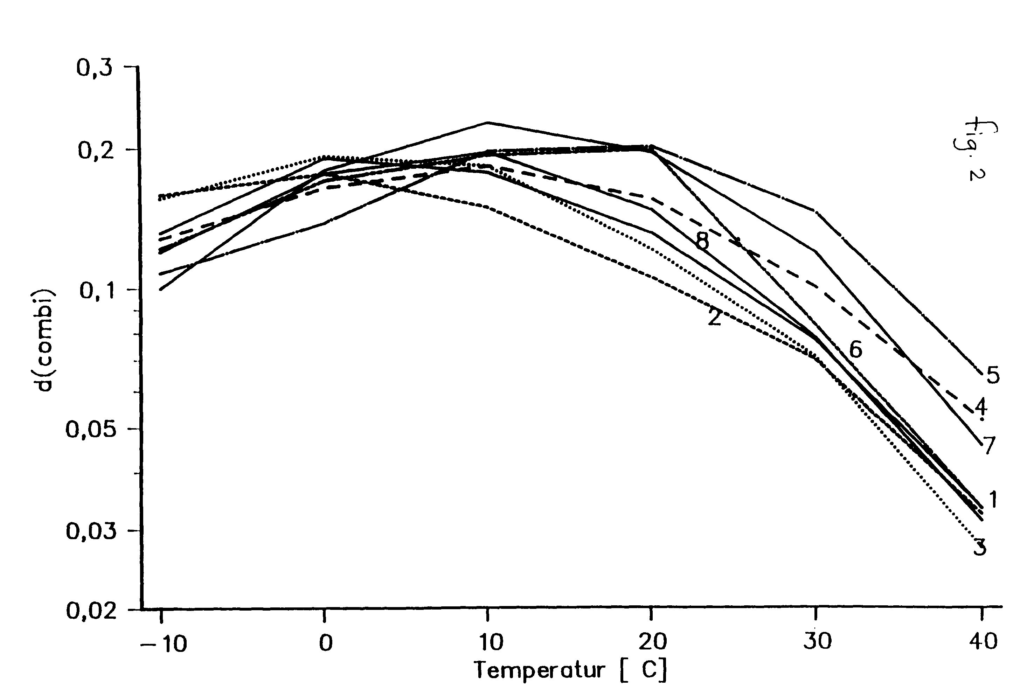

Wie aus den Tabellen 1 und 2 ersichtlich, sind die Plastisole der Beispiele 1 bis 3 gemäß Stand der Technik aufgrund ihrer hohen Viskosität nicht geeignet, im airless-Verfahren gespritzt zu werden. Die erfindungsgemäßen Zusammensetzungen der Beispiele 4 bis 8 zeichnen sich durch niedrige Viskosität aus, so daß sie ohne Mühe nach dem airless-Verfahren gespritzt werden können. Die erfindungsgemäßen Beispiele 4 bis 8 haben eine gute Lagerstabilität. Wie aus den nachfolgenden Figuren 1 und 2 hervorgeht, haben die erfindungsgemäßen Plastisole im ausgelierten Zustand im Temperaturbereich zwischen etwa +10°C und +30°C einen deutlich höheren Dämpfungsfaktor als die Zusammensetzungen des Standes der Technik gemäß Beispiel 1 bis 3.

### Erläuterung zu den Figuren 1 bis 2:

Die Figuren 1 und 2 zeigen den kombinierten Verlustfaktor bei 200 Hz von beschichteten Stahlstreifen gemäß DIN 53440 Teil 3.

**Figur 1** zeigt die Temperaturabhängigkeit des Verlustfaktors der Vergleichsversuche (**1, 2, 3**) im Vergleich zu den erfindungsgemäßen Beispielen (**4 bis 8**) normiert auf ein Belaggewicht von 50%.

**Figur 2** zeigt die Temperaturabhängigkeit des Verlustfaktors der oben genannten Beispiele normiert auf ein Schichtdickenverhältnis von 4 : 1.

Aus den Figuren 1 und 2 geht deutlich hervor, daß die erfindungsgemäßen Plastisol-Zusammensetzungen der Beispiele 4 bis 8 in dem für die Gebrauchseigenschaften besonders wichtigen Temperaturbereich von 10°C bis 30°C einen deutlich höheren Verlustfaktor haben als die Plastisole gemäß Stand der Technik.

## Patentansprüche

1. Spritzbare Plastisol-Zusammensetzungen zur Schalldämpfung auf der Basis von pulverförmigen organischen Polymeren und Weichmachern, gekennzeichnet durch einen Gehalt an
a) 5 bis 60 Gew.% mindestens eines Vinylchlorid-Vinylacetat-Copolymeren, mit einem Vinylacetatanteil von 5 bis 20 Gew.-% und einem K-Wert nach DIN 53726 von 40 bis 80, wobei das Copolymer ein Suspensionspolymer ist,
b) 5 bis 65 Gew.% Weichmacher, ausgewählt aus der Gruppe gebildet durch Alkylphthalate wie Dibutylphthalat, Dioctylphthalat, Benzylbutylphthalat, Dibenzylphthalat, Diisononylphthalat (DINP), Diisodecylphthalat (DIDP) sowie Diundecylphthalat (DIUP), organische Phosphate, Adipate und Sebazate, Benzylbenzoat, Alkylsulfonsäureester des Phenols bzw. Kresols, wobei das Weichmacher/Copolymer-Verhältnis 1:1 bis 1:4, vorzugsweise 1:1,5 bis 1:2,5 beträgt,
c) 0 bis 40 Gew.% Füllstoffen.
d) 0.01 bis 5 Gew.% eines Haftvermittlers,
e) gegebenenfalls weiteren reaktiven Zusätzen, sowie Hilfs- und Zusatzstoffen,
wobei die Summe der Einzelkomponenten 100 Gew.% beträgt.

2. Plastisolzusammensetzungen nach mindestens einem der vorhergehenden Ansprüche, **dadurch gekennzeichnet**, daß als reaktive Zusätze eine oder mehrere chemisch vernetzende Substanzen verwendet werden.

3. Plastisolzusammensetzungen nach mindestens einem der vorhergehenden Ansprüche, **dadurch gekennzeichnet,** daß als Zusatzstoff ein Treibmittel, vorzugsweise Azodicarbonamid, verwendet wird.

4. Plastisolzusammensetzung nach mindestens einem der vorhergehenden Ansprüche, gekennzeichnet durch eine Viskosität von 1 bis 3 Pa.s, gemessen bei 23 °C mit einem Rheometer,,Rheomat 30, System 14" der Fa. Contraves.

5. Verwendung von Plastisolzusammensetzungen nach mindestens einem der vorhergehenden Ansprüche zur körperschalldämpfenden und/oder die durch aufprallende Teilchen hervorgerufenen Geräusche reduzierenden und/oder Luftschwingungen in Hohlräumen verhindernden Beschichtung von steifen Substraten, insbesondere Blechen, an oder in Kraftfahrzeugen.

6. Verwendung von Zusammensetzungen nach mindestens einem der vorhergehenden Ansprüche, **dadurch gekennzeichnet**, daß die Beschichtungen gleichzeitig die Substrate vor Abrieb und/oder Korrosion schützen.

7. Verwendung der Zusammensetzung gemäß Anspruch 5, dadurch gekennzeichnet, daß der nach DIN 53440, Teil 3 gemessene kombinierte Verlustfaktor (dcombi) der gelierten Plastisolbeschichtung auf Stahlstreifen mit einem Belaggewicht von 50 % bei 200 Hz und 10 °C 0.104 bis 0.128 beträgt.

## Claims

1. Sprayable plastisol compositions for noise reduction based on powder-form organic polymers and plasticizers, characterized by a content of
a) 5 to 60% by weight of at least one vinyl chloride/vinyl acetate copolymer with a vinyl acetate content of 5 to 20% by weight and a K value according to DIN 53 726 of 40 to 80, the copolymer being a suspension polymer,
b) 5 to 65% by weight of plasticizers selected from the group consisting of alkyl phthalates, such as dibutyl phthalate, dioctyl phthalate, benzyl butyl phthalate, dibenzyl phthalate, diisononyl phthalate (DINP), diisodecyl phthalate (DIDP) and diundecyl phthalate (DIUP), organic phosphates, adipates and sebacates, benzyl benzoate, alkyl sulfonic acid esters of phenol or cresol, the ratio of plasticizer to copolymer being from 1:1 to 1:4 and preferably from 1:1.5 to 1:2.5,
c) 0 to 40% by weight of fillers,
d) 0.01 to 5% by weight of a coupling agent,
e) optionally other reactive additives and further auxiliaries and additives, the sum of the individual components being 100% by weight.

2. Plastisol compositions as claimed in claim 1, characterized in that one or more chemically crosslinking substances is/are used as the reactive additive(s).

3. Plastisol compositions as claimed in at least one of the preceding claims, characterized in that a blowing agent, preferably azodicarbonamide, is used as an additive.

4. A plastisol composition as claimed in at least one of the preceding claims, characterized by a viscosity of 1 to 3 Pa.s, as measured at 23°C with a Contraves Rheomat 30, System 14.

5. The use of the plastisol compositions claimed in at least one of the preceding claims for the coating of stiff substrates, more particularly metal plates, on or in motor vehicles to suppress mechanical vibration and/or to reduce the noise produced by particle impact and/or to prevent air vibration in cavities.

6. The use of compositions as claimed in at least one of the preceding claims, characterized in that the coatings simultaneously protect the substrates against abrasion and/or corrosion.

7. The use of composition claimed in claim 5, characterized in that the combined loss factor (dcombi) of the gelled plastisol coating on steel strips with a coating weight of 50%, as measured at 200 Hz/10°C in accordance with DIN 53 440, Part 3, is from 0.104 to 0.128.

## Revendications

1. Compositions de Plastisol pulvérisables en vue de l'atténuation du bruit, à base de polymères organiques pulvérulents et d'agents plastifiants,
caractérisées par une teneur,
a) de 5 à 60 % en poids d'au moins un copolymère chlorure de vinyle/acétate de vinyle ayant une proportion d'acétate de vinyle de 5 à 20 % en poids et une valeur K selon la norme DIN 53726 de 40 à 80, dans lesquelles le copolymère est une suspension de polymère,
b) de 5 à 65 % en poids d'agent plastifiant choisi dans le groupe formé par des phtalates d'alkyle comme le phtalate de dibutyle, le phtalate de dioctyle, le phtalate de benzyle et de butyle, le phtalate de dibenzyle, le phtalate de diisononyle (DINP), le phtalate de diisodécyle (DIDP) ainsi que le phtalate de diundécyle (DIUP), des phosphates organiques, des adipates et des sébacates, le benzoate de benzyle, les esters d'acide alkylsulfonique du phénol ou du crésol, dans lesquelles le rapport agent plastifiant/copolymère s'élève de 1:1 à 1:4, de préférence de 1:1,5 à 1:2,5,
c) de 0 à 40 % en poids de substances de remplissage,
d) de 0,01 à 5 % en poids d'un agent d'adhérence,
e) éventuellement en d'autres produits ajoutés réactifs ainsi que des adjuvants et des additifs,
pour lesquels la somme des composants individuels s'élève à 100 % en poids.

2. Compositions de Plastisol selon au moins une des revendications précédentes,
caractérisées en ce que
comme produits ajoutés réactifs on utilise une ou plusieurs substances réticulentes chimiquement.

3. Compositions de Plastisol selon au moins une des revendications précédentes,
caractérisées en ce que
comme additif on utilise un produit moussant, de préférence l'azodicarbonamide.

4. Compositions de Plastisol selon au moins une des revendications précédentes,
caractérisées par
une viscosité de 1 à 3 Pa.s mesurée à 23°C avec un rhéomètre Rheomat 30 système 14 de la société Contraves.

5. Utilisation des compositions de Plastisol selon au moins une des revendications précédentes,
pour un revêtement qui atténue les bruits de structure et/ou qui réduit les bruits provoqués par des particules qui s'entrechoquent et/ou qui empêche les vibrations de l'air dans les espaces creux, de substrats rigides en particulier des tôles sur ou dans les véhicules automobiles.

6. Utilisation de compositions selon au moins une des revendications précédentes,
caractérisée en ce que
les revêtements protègent en même temps les substrats contre l'usure et/ou la corrosion.

7. Utilisation de la composition selon la revendication 5,
caractérisée en ce que
le facteur de perte combiné (dcombi), mesuré selon la norme DIN 53440 partie 3, du revêtement de Plastisol gélifié sur des bandes d'acier avec un poids de couche de 50 %, à 200 Hz et à 10°C, s'élève à 0,104 à 0,128.
